# EUROPEAN PATENT APPLICATION

(11) **EP 2 006 348 A2**
(43) Date of publication of application: **24.12.2008**
(21) Application number: 07738048.3
(22) Date of filing: 08.03.2007
(51) Int. Cl.: C09K 11/64, C09K 11/08

(54) **METHOD FOR PRODUCING ALUMINATE PHOSPHOR AND ALUMINATE PHOSPHOR**

(30) Priority: 10.03.2006 JP 2006066170
(71) Applicant: Nagaoka University of Technology, Nagaoka-shi, Niigata 940-2188 (JP); Chubu Chelest Co. Ltd., Abeno-ku, Osaka-shi, Osaka-fu 545-0051 (JP); Chelest Corporation, Osaka-shi, Osaka-fu 545-0051 (JP)
(72) Inventor: SAITOH, Hidetoshi, Nagaoka-shi, Niigata 940-2188 (JP); TAHARA, Shunsuke, Nagaoka-shi, Niigata 940-2188 (JP); NAMBU, Nobuyoshi, Yokkaichi-shi, Mie 510-0886 (JP); NAKAMURA, Atsushi, Yokkaichi-shi, Mie 510-0886 (JP); ITO, Hiroshi, Osaka-shi, Osaka 545-0051 (JP)
(74) Representative: Müller-Boré & Partner Patentanwälte
(86) International application number: PCT/JP2007/054558
(87) International publication number: WO 2007/105598

(57) **Abstract**

The present invention provides a novel aluminate phosphor capable of emitting blue fluorescence having high color purity and high brightness in a certain wavelength range by ultraviolet ray excitation and electron beam excitation, and a useful production method thereof. The method for producing an aluminate phosphor according to the present invention is **characterized in** comprising a step of heating an aluminate represented by a composition formula: 7(Sr₁₋ₓEuₓ)O·yAl₂O₃ [wherein, x and y satisfy 0 < x ≤ 0.5 and 1 ≤ y ≤ 36] in a state of being in contact with magnesium oxide in a reducing atmosphere.

## Description

### TECHNICAL FIELD

The present invention relates to a method for producing an aluminate phosphor and an aluminate phosphor produced by the method.

### BACKGROUND ART

A phosphor having an aluminate as a main structure has been practically used widely as an ultraviolet ray excitation type phosphor which is luminous mainly in a color tone range from blue to green. Particularly, a vacuum ultraviolet ray excitation type luminescence elemental device which is luminous by a mechanism of exciting a phosphor with vacuum ultraviolet rays radiated by rare gas discharge has been actively developed for plasma display panels (PDP) in recent years. Actually, some aluminate phosphors which are luminous from blue color to green color and are used for PDP have been made practicable.

Aluminates are represented by the composition formula: xMO·yAl₂O₃ [wherein, M denotes a metal such as alkaline earth metal]. Phosphors of various compositions are produced by introducing a plurality of divalent metals for M: metal or doping M sites with rare earth metals and Mn as an activation agent. For example, the Phosphor obtained by using Ba and Mg as M: metal and doping Eu as an activation agent at the Ba site is confirmed to emit blue color fluorescence by ultraviolet ray excitation.

Among them, representative examples are BaMg₂Al₁₆O₂₇:Eu disclosed in JP 52-22836 B and BaMgAl₁₀O₁₇:Eu disclosed in JP 08-115673 A. Other than these, also known are those obtained by increasing a ratio of Ba and Al of the above-mentioned BaMgAl₁₀O₁₇:Eu; those obtained by partially replacing Ba with Sr for suppressing heat deterioration due to baking treatment (JP 2000-226574 A); and those obtained by adding Eu as an activation agent to aluminate having a magnetoplumbite structure (JP 2001-240856 A).

Further, phosphors obtained by doping aluminate with Mn as an activation agent, such as BaAl₁₂O₁₉:Mn and BaMgAl₁₄O₂₃:Mn, are also known as green luminous phosphors for emitting green fluorescence by ultraviolet ray excitation. Furthermore, phosphors having superior phosphorescent characteristics are also known, such as lanthanum-magnesium aluminate green luminous phosphors activated by Ce and Tb described in JP 06-240252 A and Ce-Mn co-activation green luminous phosphors obtained by partially replacing Ba of manganese-substituted barium-calcium aluminate phosphors with Zn and replacing the remaining Ba with Sr and further activating with Ce (JP 2000-290647 A). Additionally, europium-doped strontium aluminates emitting blue-green color with a luminescence peak wavelength of 493 nm are also known as other phosphors.

The phosphors having long time decay characteristic, so-called afterglow characteristic, are included in aluminate phosphors. The afterglow phosphors have a main structure of a compound represented by the formula MAlO₄ [wherein, M denotes at least one metal element selected from Ca, Sr and Ba]. As the afterglow phosphors, those containing Eu as an activation agent and other rare earth element as a co-activation agent are known (JP 07-11250 A). In addition, there are those with improved decay characteristic by partially replacing aluminum of the aluminate host body with boron and thereby stabilizing the crystal (JP 08-73845 A), and those containing Sr₂Al₆O₁₁ as a host body and europium as an activation agent or dysprosium as a co-activation agent in addition to europium as an activation agent (JP 2000-63823 A).

As described above, conventional aluminate phosphors are constituted with oxides containing three or more kinds of metals, and it is important how to homogenously mix the respective metal components to produce these phosphors.

Almost all of the above-mentioned phosphors are produced by a classical method, i.e. a solid-phase method, by which a complex metal oxide can be obtained by mixing solid-phase raw materials at a desired metal composition ratio and firing the mixture. In the solid-phase method, multiple metal oxides are mixed in a solid-phase state; therefore the obtained phosphors are apparently heterogeneous from a micro viewpoint, even if the metal oxides are mixed so homogenously. Further, even if the metal composition ratio or the doping amount of metal elements is so finely controlled, or even if the composition ratios of the metal components contained in each particle are controlled as desired, it is principally impossible to produce a phosphor having completely homogenous metal distribution in the respective particles.

In addition, in order to produce a homogenous complex metal oxide type phosphor or aluminate type phosphor which contains multiple metal oxides as described above, it is required to obtain a homogenous complex metal composition as a precursor immediately before the phosphor; and in order to obtain the homogenous precursor, it is required to synthesize the precursor via a homogenous state from the time of raw materials. As such a method, a liquid-phase method which mainly utilizes chemical techniques, such as a sol-gel method and a co-precipitation method, has been known.

However, the production cost increases and the production work becomes additionally very complicated even in these conventional liquid-phase methods, if a composition ratio of multiple metal components is intended to be homogenous. Further, even if the metal composition in a solution state is homogenous, the metal composition ratio of a powder to be obtained inevitably becomes heterogeneous. It is because hydrolysis speeds and solubility products of metal compounds differ in accordance with the types of metals, and the metal composition ratios of precipitates produced in the process of hydrolysis, neutralization or precipitate production becomes heterogeneous. Such a heterogeneous metal composition is supposed to cause an adverse effect not a little on the fluorescence characteristic of the composite oxide phosphor or aluminate phosphor.

In view of the above-mentioned circumstance, the inventors of the present invention made investigations repeatedly to develop a novel aluminate blue luminescence phosphor and first developed a art disclosed in WO2005/090513. The invention disclosed in the publication relates to a novel blue luminescence phosphor represented by Sr₇Al₁₂O₂₅:Eu and a wide range of applications is expected. However, this phosphor has a luminescence peak wavelength of 410 nm, which is slightly close to ultraviolet rays; and therefore, an improvement is demanded for applications to displays and three wavelength fluorescent lamps. That is, it is desired that the luminescence peak wavelength is adjusted to close to 450 nm for giving better color purity to apply the phosphor for these uses. If such a characteristic is provided, it is certain that the applications are remarkably expanded.

### DISCLOSURE OF THE INVENTION

The present invention was completed under such circumstances, and the art disclosed in WO 2005/090513 was further developed to be the present invention. An object of the present invention is to develop a novel ultraviolet ray excitation type phosphor or electron beam excitation aluminate type phosphor having a homogenous composition and fluorescing with high blue color by focusing on aluminate phosphor which is confirmed to be luminous by ultraviolet ray excitation or electron beam excitation. Further, another object of the present invention is to provide a method for efficiently producing such a phosphor.

A method for producing an aluminate phosphor according to the present invention is characterized in comprising a step of heating an aluminate represented by a composition formula: 7(Sr₁₋ₓEuₓ)O·yAl₂O₃ [wherein, x and y satisfy 0 < x ≤ 0.5 and 1 ≤ y ≤ 36) in a state of being in contact with magnesium oxide in a reducing atmosphere.

An aluminate phosphor according to the present invention is characterized in being produced by the above production method and in fluorescing at a luminescence peak wavelength of 450 to 470 nm by ultraviolet ray excitation and electron beam excitation.

### BRIEF DESCRIPTION OF THE DRAWINGS

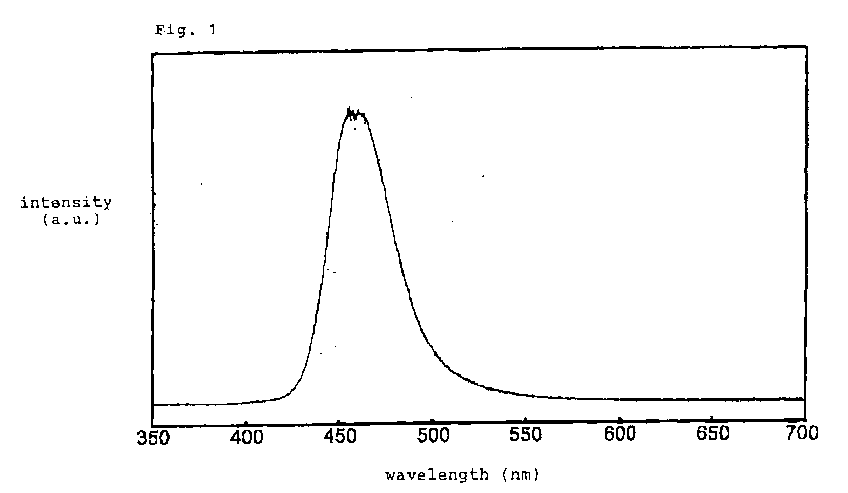

Fig. 1 is a photoluminescence spectra exited by UV at 325 nm of the aluminate phosphor obtained in Example.

### BEST MODE FOR CARRYING OUT THE INVENTION

First, the method for producing the phosphor according to the present invention will be described in detail.

With respect to the aluminate to be used in the method of the invention and represented by the composition formula: 7(Sr₁₋ₓEuₓ)O·yAl₂O₃, the range of x: Eu-doping amount relative to Sr is "0 < x ≤ 0.5" and the range of y: the ratio of alumina, i.e. Al₂O₃, is "1 ≤ y ≤ 36".

When the above-mentioned x: Eu-doping amount is zero, in other words, the aluminate is not doped by Eu, there is no emission center and thus no fluorescence. On the other hand, when x: Eu-doping amount becomes so high as to exceed 0.5, concentration quenching occurs to remarkably decrease the luminance intensity. Accordingly, the value of "x" is defined as described above in the present invention. The range of "x" is more preferably "0.001 ≤ x ≤ 0.3", and the highest phosphorescent characteristics are exhibited in this range.

On the other hand, when y: the ratio of Al₂O₃ is less than 1, the function of the phosphor is too lowered to emit satisfactory fluorescence; but when "y" becomes excessively high as to exceed 36, no satisfactory fluorescent characteristic can be obtained. Accordingly, the value of "y" is defined in the above-mentioned range in the present invention. The range of "y" is more preferably "3 ≤ y ≤ 27", and the highest phosphorescent characteristics are exhibited in this range.

The aluminate represented by the composition formula: 7(Sr₁₋ₓEuₓ)O·yAl₂O₃ can be produced by the steps of (1) producing a powder composed of an organic metal chelate containing Sr, Eu and Al as metal components; and (2) firing the powder obtained in the step (1) to obtain the aluminate. More detailed production conditions are disclosed in WO 2005/090513 described above. Specific production conditions are not particularly limited; however when the organic metal chelate powder in which respective metal components such as Sr, Al and Eu are homogenously mixed in molecular level is used as precursor, strontium aluminate represented by the above-mentioned general formula can be more easily obtained.

The organic metal chelate powder to be a precursor can easily be obtained by preparing an aqueous clear organic metal chelate solution by mixing a respective metal compound and an organic chelating agent at a predetermined metal composition ratio and thereafter, for example, spray-drying this aqueous solution.

Specifically, the following method can be exemplified. First, a powder containing organic metal chelates of Sr, Eu and Al is produced. This production is carried out as follows. At first, Sr and Eu are accurately weighed to have a predetermined metal composition, and the metals are reacted with an organic chelating agent to produce the aqueous clear organic metal chelate solution. This reaction is carried out in an aqueous medium at a temperature in a range of, for example, 20°C to a boiling point, preferably 50 to 70°C. The concentration of the aqueous solution in terms of the solid content is preferably 5% by mass or higher, 30% by mass or lower, and more preferably 10% by mass or higher, 20% by mass or lower. The temperature range is not limited to the range.

The use amount of the organic chelating agent is determined to be not lower than the equivalent amount to the metal ions to completely dissolve all of the metals, and it is preferably not lower than 1.0 time by mole and not higher than 1.5 times by mole. When the metal chelate or the organic chelating agent is not completely dissolved, it is preferable to add ammonia or amine for complete dissolution. Further, the organic metal chelates of the above-mentioned respective metals are prepared separately, and the chelates are accurately weighed and mixed at a predetermined metal ratio.

As metal raw materials, carbonates, nitrates, hydroxides and oxides may be used. Oxides and carbonates are particularly preferable in the invention using strontium and europium, since oxides and carbonates have good reactivity and do not leave any excess ions after reaction. With respect to aluminum, substantially preferable raw material to be used is limited to chloride, sulfate or nitrate in consideration of the reactivity with the organic chelating agent, and nitrate is preferable. It is particularly preferable to use an aluminum source obtained by first producing an aluminum chelate solution using chloride, sulfate or nitrate and then producing a high purity aluminum chelate crystal by crystallization.

A primarily concerning matter at the time of producing an aluminate phosphor is contamination of an impurity element. A sodium salt and potassium salt among organic metal chelates remain in a phosphor even after thermal decomposition and become a factor contributing to the disturbance of the composition of the phosphor; therefore, a sodium salt and potassium salt should not be used. Further, it is also preferable not to use an inorganic acid and inorganic acid salt containing chlorine, sulfur or phosphorus, such as hydrochloric acid, sulfuric acid and phosphoric acid, and organic compound such as thiol compound as much as possible. These compounds are almost completely thermally decomposed in the firing process; however these compounds possibly cause an adverse effect on production of composite metal chelate with a homogenous composition.

Examples of the organic chelating agent to be used in the present invention include water-soluble aminocarboxylic acid chelating agents such as ethylenediaminetetraacetic acid, 1,2-cyclohexanediaminetetraacetic acid, dihydroxyethylglycine, diaminopropanoltetraacetic acid, diethylenetriaminepentaacetic acid, ethylenediaminediacetic acid, ethylenediaminedipropionic acid, hydroxyethylenediaminetriacetic acid, glycol ether diaminetetraacetic acid, hexamethylenediaminetetraacetic acid, ethylenediaminedi(o-hydroxyphenyl) acetic acid, hydroxyethyliminodiacetic acid, iminoacetic acid, 1,3-diaminopropanetetraacetic acid, 1,2-diaminopropanetetraacetic acid, nitrilotriacetic acid, nitrilotripropionic acid, triethylenetetraminehexaacetic acid, ethylenediaminedisuccinic acid, 1,3-diaminopropanedisuccinic acid, glutamic acid-N,N-diacetic acid, aspartic acid-N, N-diacetic acid. Further, any of monomer, oligomer or polymer thereof may also be used. It is more preferable to use the aminocarboxylic acid chelating agent and/or salt thereof as the organic chelating agent.

It is more preferable to use a complex composed of the aminocarboxylic acid chelating agent and a metal ion and/or salt thereof as the organic metal chelate. Further, it is more preferable to use at least one of compounds selected from a group consisting of nitrilotriacetic acid, ethylenediaminetetraacetic acid, diethylenetriaminepentacetic acid and triethylenetetraminehexacetic acid as the aminocarboxylic acid chelating agent.

It is desired to use free acid type or ammonium salt or amine salt, and to properly select the chelating agent in consideration of chelate production constants with the respective metals, stability of the metal chelates, and solubility in water or an aqueous alkaline solution of the metal chelates.

The organic metal chelate aqueous solution to be produced in the above-mentioned manner is subsequently powdered by spray-drying. The conditions of spray-drying may be properly set in accordance with the concentration of the aqueous solution, a solution treatment speed, a spraying air quantity, a hot blow air quantity and the like. The upper limit of the drying temperature is preferably set to a temperature at which the organic compounds are not decomposed, and the temperature may be that at which drying is sufficiently carried out. From these points of view, the drying temperature is preferably in a range of 100 to 200°C, and more generally in a range of 140 to 180°C. In consideration of such a drying temperature, the above-mentioned aminocarboxylic acid chelating agents to be used in the present invention are preferable to be those which are not thermally decomposed at a temperature about 200°C or lower.

The organic metal chelate powder obtained in the above-mentioned manner is subsequently fired to be formed into a metal oxide. Preferable conditions at that time are as follows. When the organic metal chelate powder obtained in the above-mentioned manner is directly fired, a composite oxide powder is obtained due to thermal decomposition of the organic component. The firing may be carried out for completely decomposing the organic component. For example, when the firing is carried out at 500°C or higher, the organic component is entirely decomposed and fired out to give a composite metal oxide. As the firing temperature is higher, the crystallinity of the composite metal oxide is improved; therefore, it is possible to fire at a temperature to 1600°C if necessary.

The atmosphere at the time of firing and heating is not necessarily required to be air, and oxygen-enriched atmosphere, neutral atmosphere or reducing atmosphere may be employed according to the necessity. The firing is preferably carried out in an atmosphere containing at least one selected from a group consisting of air, oxygen and nitrogen.

The aluminate powder obtained in the above-mentioned manner is contacted with magnesium oxide, and is heated in a reducing atmosphere while being kept in the contact state to obtain an aluminate phosphor of the present invention. The shape of magnesium oxide to be used is not particularly limited, and, for example, a coarse particle, a fine particle, a thin film, a plate and the like may be used. These shapes may be composed of a single crystal or a polycrystal.

When the above-mentioned aluminate powder and magnesium oxide are heated in a reducing atmosphere while being kept in the contact state, magnesium of the magnesium oxide is thermally diffused into the aluminate salt powder over the contact interface of the aluminate powder and magnesium oxide. The thus obtained phosphor has a crystal structure apparently different from that of strontium aluminate phosphor disclosed in WO 2005/090513. In other words, the method of the invention gives a novel blue luminescence phosphor having a novel crystal structure and composition and fluorescing particular at a luminescence peak wavelength of 450 to 470 nm.

With respect to the heating conditions, the precursor powder may be heated in the contact condition in a reducing atmosphere, and a heating temperature is preferably 500°C or higher, 1600°C or lower, more preferably 800°C or higher, 1500°C or lower, and even more preferably 800°C or higher, 1500°C or lower. The reducing atmosphere is also not particularly limited; however is preferably argon/hydrogen mixed atmosphere or nitrogen/hydrogen mixed atmosphere.

According to the above described production method of the present invention, it becomes possible to efficiently and reliably produce the phosphor with a composition homogenous at molecular level by using a powder containing organic metal chelates mixed homogenously in molecular level as a precursor.

The aluminate phosphor of the present invention is produced by the method of the present invention; however, so far, a composition formula after the heat reduction is not yet made clear. However, the heat reduction product has particular luminescent property of emitting blue fluorescence with high color purity particularly at a luminescence peak wavelength of 450 to 470 nm by ultraviolet ray excitation and electron beam excitation as described above.

The phosphor of the present invention emits blue color fluorescence with high color purity particularly at a luminescence peak wavelength of 450 to 470 nm; however, the fluorescence life is very short. It is quite a contrast to that the strontium aluminate afterglow type phosphor disclosed in the above-mentioned publication has a very long fluorescence life, that is, a long decay characteristic.

The metal composition ratio and structure of the phosphor according to the present invention is presently not yet made clear. According to the results of x-ray diffractiometry of the phosphor of the present invention obtained by heat reduction, it is supposed that the possibility of coexistence of a plurality of phases is certainly high. The crystal structure is apparently different from that of the strontium aluminate phosphor disclosed in the above-mentioned publication and both should be classified into entirely different phosphors.

### EXAMPLE

Hereinafter, the invention will be described in detail with reference to Example and Test Example; however, it is not intended that the range of the present invention be limited thereto.

### Example 1

A 1 L beaker was loaded with ethylenediaminetetraacetic acid (217 g) and water to adjust the total weight to be 500 g, and then ethylenediaminetetraacetic acid was dissolved by adding ammonia water (100 g). While stirring the mixture, strontium carbonate (110 g) was slowly added. Then, the temperature was raised to 100°C and the mixture was stirred for 2 hours to completely dissolve strontium carbonate. Water was added to the solution to adjust the concentration, and thus a colorless and transparent strontium-ethylenediaminetetraacetic acid (Sr-EDTA) complex aqueous solution was obtained.

Separately, a 100 ml beaker was loaded with ethylenediaminetetraacetic acid (0.65 g) and water to adjust the total weight to be 100 g, and then ethylenediaminetetraacetic acid was dissolved by adding ammonia water (0.3 g) . While stirring the mixture, europium oxide (0.4 g) was added, and the resulting mixture was stirred at 80°C for 30 minutes. As a result, europium oxide was completely dissolved and a colorless transparent europium-ethylenediaminetetraacetic acid (Eu-EDTA) complex aqueous solution was obtained.

A 100 ml beaker was loaded with Sr-EDTA complex solution (29.72 g, Sr content: 4.41% by mass) and Eu-EDTA complex solution (10.55 g, Eu content: 0.440% by mass) obtained by the above and aluminum ammonium ethylenediaminetetraacetate (EDTA-Al-NH₄) (9.91 g, Al content: 7.13% by mass), which were accurately weighed, and then water was added to adjust the total weight to be 100 g. Next, the mixture was stirred for 30 minutes for complete dissolution to obtain a colorless and transparent (Sr, Al, Eu) -EDTA complex aqueous solution of which a metal composition ratio is (Sr + Eu) /Al = 7/12 and Eu/Sr = 0.02/0.98.

The solution was powdered at a drying temperature of 160°C by a spray-drying method to obtain a (Sr, Al, Eu)-EDTA complex powder. When an x-ray diffractiometric chart of the powder was confirmed, a halo pattern was shown due to scattering of impingent x-rays to show that the structure was amorphous.

The complex powder was pre-fired at 800°C for 3 hours using an open air type electric furnace to thermally decompose the organic compounds and obtain an aluminate powder. The obtained aluminate powder (0.01 g) was dispersed in ethanol. The dispersion was dropped on a (100)-oriented magnesium oxide substrate (10 mm × 10 mm) and dried, and then heat reduction was carried out in Ar + H₂ (3%) gas current at 1400°C × 24 hours to prepare a phosphor film.

Fig. 1 shows a photoluminescence spectrum excited by UV at 325 nm of the phosphor film. As obvious from the figure, it can be understood that the phosphor emits blue color fluorescence with high color purity and high brightness at a luminescence peak wavelength of 450 to 470 nm. Further, it was also confirmed that the cathodoluminescence spectra obtained at an acceleration voltage for the electrons of 30 kV is also same as the spectrum shown in Fig. 1, and thus it is proved that the phosphor is a blue luminescence phosphor applicable for both ultraviolet ray excitation and electron beam excitation.

### INDUSTRIAL APPLICABILITY

The aluminate phosphor of the present invention is remarkably advantageously usable as a blue luminescence phosphor for three wavelength fluorescent lamps, plasma displays and the like using ultraviolet rays for excitation source and also a phosphor for Braun tubes, fluorescent display tubes and the like using electron beam for excitation source.

According to the production method of the present invention, the blue luminescence phosphor having the above-mentioned properties can be efficiently produced and the phosphor advantageously usable for various applications is provided.

## Claims

1. A method for producing an aluminate phosphor, **characterized in** comprising a step of heating an aluminate represented by a composition formula: 7(Sr₁₋ₓEuₓ)O·yAl₂O₃ [wherein, x and y satisfy 0 < x ≤ 0.5 and 1 ≤ y ≤ 36] in a state of being in contact with magnesium oxide in a reducing atmosphere.

2. The production method according to claim 1, wherein the magnesium oxide is at least one kind selected from a bulk, a powder and a plate composed of a single crystal or a polycrystal.

3. The production method according to claim 1 or 2, wherein the aluminate represented by the composition formula: 7(Sr₁₋ₓEuₓ)O·yAl₂O₃ [wherein, x and y satisfy 0 < x ≤ 0.5 and 0 < y ≤ 10] is produced by steps of:
(1) producing a powder composed of an organic metal chelate containing Sr, Eu and Al as metal components; and
(2) firing the powder obtained in the step (1) to obtain the aluminate.

4. The production method according to claim 3, wherein the powder of the step (1) is obtained by spray-drying a clear organic metal chelate aqueous solution prepared by mixing a metal single substance of the constituent metal element or a metal compound thereof, an organic chelating agent and/or an organic metal chelate of the constituent metal element at a predetermined metal composition.

5. The production method according to claim 3 or 4, wherein an aminocarboxylic acid chelating agent and/or a salt thereof is used as the organic chelating agent.

6. The production method according to claim 5, wherein at least one selected from a group consisting of nitrilotriacetic acid, ethylenediaminetetraacetic acid, diethylenetriaminepentaacetic acid and triethylenetetraminehexaacetic acid is used as the aminocarboxylic acid chelating agent.

7. The production method according to any one of claims 3 to 6, wherein a complex composed of an aminocarboxylic acid chelating agent and a metal ion and/or a salt thereof is used as the organic metal chelate.

8. The production method according to any one of claims 3 to 7, wherein firing is carried out in atmosphere containing at least one selected from a group consisting of air, oxygen and nitrogen in the step (2).

9. The production method according to any one of claims 3 to 8, wherein firing is carried out at a temperature in a range of 500 to 1600°C in the step (2).

10. The production method according to any one of claims 1 to 9, wherein a mixed gas of nitrogen and hydrogen or a mixed gas of argon and hydrogen is used for the reducing atmosphere.

11. The production method according to any one of claims 1 to 10, wherein the heating is carried out in a range of 800 to 1500°C.

12. An aluminate phosphor produced by any one of the production methods according to any one of claims 1 to 11, **characterized in** fluorescing at a luminescence peak wavelength of 450 to 470 nm by ultraviolet ray excitation and electron beam excitation.

13. The aluminate phosphor according to claim 12, wherein x and y in the composition formula satisfy 0.001 < x ≤ 0.3 and 3 ≤ y ≤ 27.
